(19)

Europäisches Patentamt
European Patent Office
Office européen des brevets

(11) **EP 1 819 084 A1**

(12) **EUROPEAN PATENT APPLICATION**
published in accordance with Art. 158(3) EPC

(43) Date of publication:
**15.08.2007 Bulletin 2007/33**

(51) Int Cl.:
*H04J 13/04* (2006.01)    *H04J 1/00* (2006.01)

(21) Application number: **05811696.3**

(22) Date of filing: **29.11.2005**

(86) International application number:
**PCT/JP2005/021921**

(87) International publication number:
**WO 2006/059619 (08.06.2006 Gazette 2006/23)**

(84) Designated Contracting States:
**DE ES FR GB**

(30) Priority: **30.11.2004 JP 2004346820**

(71) Applicant: **Suehiro, Naoki**
**Tsukuba-shi,**
**Ibaraki 305-0031 (JP)**

(72) Inventor: **Suehiro, Naoki**
**Tsukuba-shi,**
**Ibaraki 305-0031 (JP)**

(74) Representative: **Rees, Alexander Ellison et al**
**Urquhart-Dykes & Lord LLP**
**30 Welbeck Street**
**London W1G 8ER (GB)**

(54) **WIRELESS COMMUNICATION SYSTEM, WIRELESS COMMUNICATION METHOD, AND COMMUNICATION APPARATUS**

(57)    A wireless communication system includes plural wireless communication apparatuses. Each wireless communication apparatus includes a transmitter 10 including a spread unit 14 for spreading a transmission sequence to be transmitted with a predetermined spread sequence, a pseudo periodic sequence generating unit 13 for generating a periodic sequence in which the transmission sequence to be transmitted is repeated a predetermined number of times, and a modulating unit 15 for modulating, with a carrier frequency, the transmission sequence to be transmitted. Each wireless communication apparatus includes a receiver 20 including a demodulating unit 22 configured to demodulate a reception wave modulated with the carrier frequency and a despreading unit 27 for despreading the spread signal sequence. The transmission sequence to be transmitted includes a pilot signal used for measuring multipath properties and a transmission data signal.

FIG.1

**Description**

TECHNICAL FIELD

The present invention relates to a wireless communication system, a wireless communication method, and a communication apparatus.

BACKGROUND ART

In wireless communication, communication apparatuses share a wireless space. Therefore, to establish a communication system, it is necessary to take measures not only for self-multipath interference but also for co-channel interference (channel-to-channel interference). As a signal design method that makes it possible to avoid co-channel interference, there is known an approximate synchronization CDMA system using signals consisting of multiphase finite length (pseudo periodic) sequences (see Patent Document 1).

Patent Document 1: Japanese Patent No. 3145642

DISCLOSURE OF THE INVENTION

PROBLEMS TO BE SOLVED BY THE INVENTION

However, in the invention described in Patent Document 1, when communications are performed between a transmitter and a receiver, the transmitter prepares a basic sequence consisting of two-phase or four-phase chips, and transmits an expanded transmission frame. The expanded transmission frame is constructed by repeatedly arranging one or a plurality of the basic sequence so as to obtain a finite length periodic sequence with a comb-form spectrum, and by adding the replica of a plurality of chips of a back portion and a front portion of the finite length periodic sequence to the outside of the front portion and the outside of the back portion of the finite length periodic sequence, respectively. The receiver demodulates the extended transmission frame using a matched filter matched to the finite length periodic sequence prior to extension. Consequently, the structure of each communication apparatus becomes disadvantageously complex.

The present invention has been made in view of the above circumstances, and an object of the present invention is therefore to provide a wireless communication system, a wireless communication method, and a communication apparatus in which co-channel interference is reduced with a simple structure in the communication apparatus.

MEANS TO SOLVE THE PROBLEMS

To solve the above problems, the present invention provides means to solve the problems having the following characteristics.

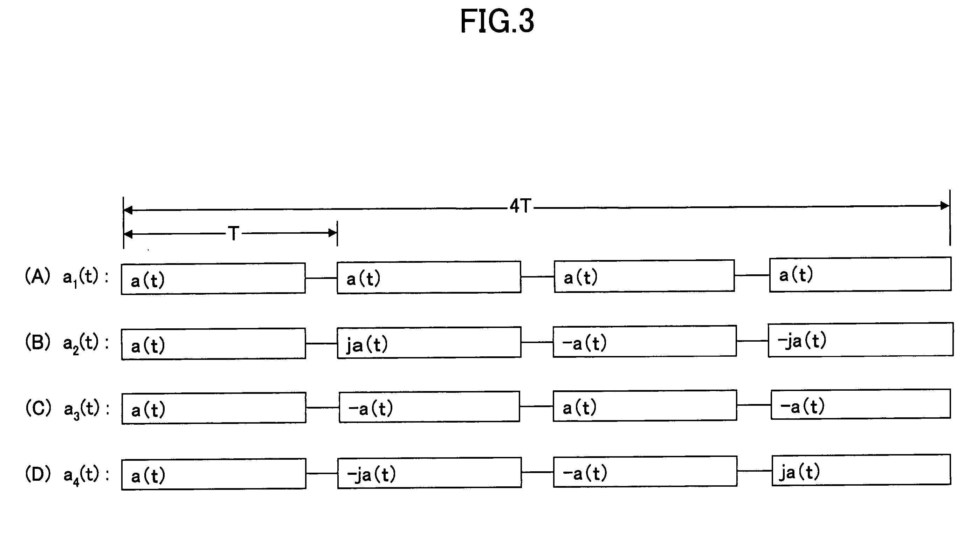

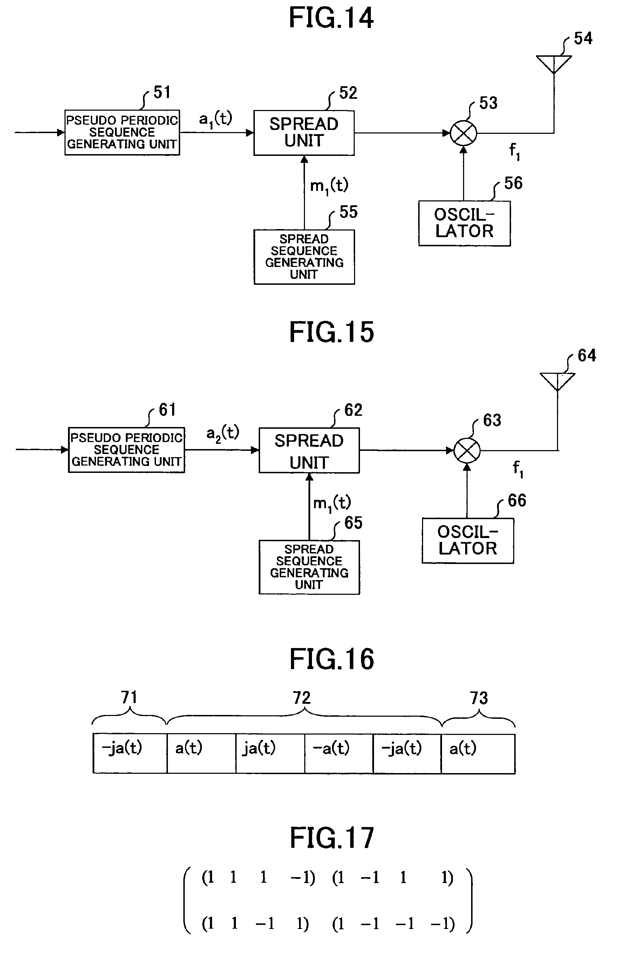

The invention described in claim 1 is a wireless communication system including plural wireless communication apparatuses, wherein each of the wireless communication apparatuses includes a transmitter including a pseudo periodic sequence generating unit configured to generate a periodic sequence in which a transmission sequence to be transmitted is repeated a predetermined number of times (for example, the signal a $(t)_1$, the signal $a(t)_2$, the signal $a(t)_3$, and the signal $a(t)_4$ shown in FIG. 3 and the signals shown in FIG. 16) and a modulating unit configured to modulate, with a carrier frequency, the transmission sequence to be transmitted, each of the wireless communication apparatuses includes a receiver including a demodulating unit configured to demodulate a reception wave modulated with the carrier frequency, the transmission sequence to be transmitted includes a pilot signal used for measuring multipath properties and a transmission data signal, and the wireless communication apparatuses transmit different said carrier frequencies (for example, the carrier frequencies are made different by the relationship expressed by the equation (6)).

The invention described in claim 2 is the wireless communication system according to claim 1, wherein the transmitter of each of the wireless communication apparatuses includes a frequency control unit configured to change the carrier frequency and the receiver of each of the wireless communication apparatuses includes a carrier frequency detector configured to detect a carrier frequency used by another wireless communication apparatus, and the frequency control unit controls the carrier frequency of the wireless communication apparatuses in which the frequency control unit is provided so as to be different from a carrier frequency used by another wireless communication apparatus.

The invention described in claim 3 is the wireless communication system according to claim 1, wherein the transmitter of each of the wireless communication apparatuses includes a frequency control unit configured to change the carrier frequency and the receiver of each of the wireless communication apparatuses includes an interference detector configured to detect interference status, and the frequency control unit controls the carrier frequency of the wireless communication apparatuses in which the frequency control unit is provided so as to be different from a carrier frequency used by another wireless communication apparatus based on output from the interference detector.

The invention described in claim 4 is a wireless communication system including plural wireless communication apparatuses, wherein each of the wireless communication apparatuses includes a transmitter including a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted, each of the wireless communication apparatuses includes a receiver including a demodulating unit configured to demodulate a reception wave modulated with the carrier frequency, the transmission sequence to be transmitted includes a pilot signal used for measuring multipath properties and a transmission data signal, and the pseudo periodic sequence generating unit sequentially multiples the transmission sequence to be transmitted by a vector component of a predetermined DFT matrix to generate the periodic sequence.

In the invention described in claim 5, the DFT matrix $F_N$ used by the pseudo periodic sequence generating unit is expressed as

$$F_N = \begin{bmatrix} \text{vector } f_0 \\ \text{vector } f_1 \\ \cdot \\ \cdot \\ \cdot \\ \text{vector } f_{N-1} \end{bmatrix} \quad \cdots (1)$$

where the transmission signal sequence is $A(a_0 a_1 \cdots a_M)$, wherein with the transmission signal sequence $A(a_0 a_1 \cdots a_M)$ and vector $f_x$ $(0 \leq X \leq N-1)$, a pseudo periodic sequence of the transmission signal sequence A based on vector $f_x \otimes A$ is generated and transmitted, wherein assuming that a known signal sequence $B(b_0 b_1 \cdots b_M)$ has the same length as the transmission signal sequence, the received pseudo periodic sequence of the transmission signal sequence A is applied to a matched filter of vector $f_x \otimes B$ to obtain the transmission signal sequence from output of the matched filter. Incidentally, $\otimes$ hereinafter denotes a Kronecker product.

The invention described in claim 6 is the wireless communication system according to claim 1 or 4, wherein the transmitter of each of the wireless communication apparatuses includes a periodic sequence control unit configured to control a manner of repeating the periodic sequence generated by the pseudo periodic sequence generating unit and the receiver of each of the wireless communication apparatuses includes an interference detector configured to detect interference status, and the periodic sequence control unit controls the manner of repeating the periodic sequence generated by the pseudo periodic sequence generating unit based on output from the interference detector so as to mitigate interference.

The invention described in claim 7 is the wireless communication system according to claim 1 or 4, wherein the pseudo periodic sequence generating unit uses any one of filters having properties of (1, 1, 1, 1), (1, j, -1, -j), (1, -1, 1, -1), (1, -j, -1, j) to generate the periodic sequence.

The invention described in claim 8 is the wireless communication system according to claim 1 or 4, wherein the spread sequence or the pilot signal used for measuring the multipath properties is a zero correlation zone sequence.

The invention described in claim 9 is the wireless communication system according to claim 1 or 4, wherein the wireless communication system is a mobile communication system.

The invention described in claim 10 is the wireless communication system according to claim 1 or 4, wherein the wireless communication system is a wireless LAN communication system.

The invention described in claim 11 is a wireless communication method performed in a wireless communication system including plural wireless communication apparatuses, the wireless communication method including the steps of a transmitting step and a receiving step; wherein the transmitting step includes a periodic sequence generating step of generating a periodic sequence in which a transmission sequence to be transmitted is repeated a predetermined number of times and a modulating step of modulating, with a carrier frequency, the transmission sequence to be transmitted, the receiving step includes a demodulating step of demodulating a reception wave modulated with the carrier frequency, the transmission sequence to be transmitted includes a pilot signal used for measuring multipath properties and a transmission data signal, and the wireless communication apparatuses transmit different said carrier frequencies at different timings.

The invention described in claim 12 is a wireless communication method performed in a wireless communication system including plural wireless communication apparatuses, the wireless communication method including the steps of a transmitting step and a receiving step; wherein the transmitting step includes a spreading step of spreading a transmission sequence to be transmitted with a predetermined spread sequence, a periodic sequence generating step of generating a periodic sequence in which the transmission sequence to be transmitted is repeated a predetermined number of times, and a modulating step of modulating, with a carrier frequency, the transmission sequence to be transmitted, the receiving step includes a demodulating step of demodulating a reception wave modulated with the carrier frequency and a despreading step of despreading the spread signal sequence, the transmission sequence to be transmitted includes a pilot signal used for measuring multipath properties and a transmission data signal, and the periodic sequence generating step includes a step of sequentially multiplying the transmission sequence to be transmitted by a vector component of a predetermined DFT matrix to generate the periodic sequence.

The invention described in claim 13 is the wireless communication method according to claim 12, wherein the DFT matrix $F_N$ used by the pseudo periodic sequence generating unit is expressed as

$$F_N = \begin{bmatrix} \text{vector } f_0 \\ \text{vector } f_1 \\ \cdot \\ \cdot \\ \cdot \\ \text{vector } f_{N-1} \end{bmatrix} \quad \cdots (2)$$

where the transmission signal sequence is $A(a_0 a_1 \cdots a_M)$, wherein with the transmission signal sequence $A(a_0 a_1, \cdots a_M)$ and vector $f_x$ ($0 \le X \le N-1$), a pseudo periodic sequence of the transmission signal sequence A based on vector $f_x \otimes A$ is generated and transmitted, wherein assuming that a known signal sequence $B(b_0 b_1 \ldots b_M)$ has the same length as the transmission signal sequence, the received pseudo periodic sequence of the transmission signal sequence A is applied to a matched filter of vector $f_x \otimes B$ to obtain the transmission signal sequence from output of the matched filter.

The invention described in claim 14 is the wireless communication method according to claim 12, wherein the periodic sequence is generated at the periodic sequence generating step by using any one of filters having properties of (1, 1, 1, 1), (1, j, -1, - j), (1, -1, 1, -1), (1, -j, -1, j).

The invention described in claim 15 is the wireless communication method according to claim 12, wherein the spread sequence or the pilot signal used for measuring the multipath properties is a zero correlation zone sequence.

The invention described in claim 16 is a communication apparatus including a transmitter and a receiver, wherein the transmitter includes a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted, the receiver includes a demodulating unit configured to demodulate a reception wave modulated with the carrier frequency, the transmission sequence to be transmitted includes a pilot signal used for measuring multipath properties and a transmission data signal, and the wireless communication apparatuses transmit different said carrier frequencies.

The invention described in claim 17 is a communication apparatus including a transmitter and a receiver, wherein the transmitter includes a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted, the receiver includes a demodulating unit configured to demodulate a reception wave modulated with the carrier frequency, the transmission sequence to be transmitted includes a pilot signal used for measuring multipath properties and a transmission data signal, and the pseudo periodic sequence generating unit sequentially multiples the transmission sequence to be transmitted by a vector component of a predetermined DFT matrix to generate the periodic sequence.

The invention described in claim 18 is the communication apparatus according to claim 17, wherein the DFT matrix $F_N$ used by the pseudo periodic sequence generating unit is expressed as

$$F_N = \begin{bmatrix} \text{vector } f_0 \\ \text{vector } f_1 \\ \cdot \\ \cdot \\ \cdot \\ \text{vector } f_{N-1} \end{bmatrix} \quad \cdots (3)$$

where the transmission signal sequence is $A(a_0 a_1 \cdots a_{M-1})$, wherein with the transmission signal sequence $A(a_0 a_1 ... a_{M-1})$ and vector $f_x (0 \le X \le N-1)$, a pseudo periodic sequence of the transmission signal sequence A based on a vector $f_x \otimes A$ is generated and transmitted, wherein assuming that a known signal sequence $B(b_0 b_1 \cdots b_{M-1})$ has the same length as the transmission signal sequence, the received pseudo periodic sequence of the transmission signal sequence A is applied to a matched filter of vector $f_x \otimes B$ to obtain the transmission signal sequence from the output of the matched filter.

EFFECTS OF THE INVENTION

According to the present invention, it is possible to provide a wireless communication system and a wireless communication method in which co-channel interference is reduced with a simple structure in a communication apparatus.

BRIEF DESCRIPTION OF THE DRAWINGS

FIG. 1 is a diagram for describing a wireless communication system according to the present invention;
FIG. 2 is a diagram for describing a transmission signal format;
FIG. 3 is a diagram for describing transmission signals repeated for a predetermined number of times;
FIG. 4 is a diagram for describing a spectrum of transmission signals;
FIG. 5 is a diagram of a wireless communication apparatus (part 1);
FIG. 6 is a diagram of a wireless communication apparatus (part 2);
FIG. 7 is a diagram for describing a spectrum including four signals of $a_1 (t)$, $a_2 (t)$, $a_3 (t)$, and $a_4 (t)$;
FIG. 8 illustrates an example of a filter having a property of (1, 1, 1, 1);
FIG. 9 illustrates an example of a filter having a property of (1, j, -1, -j);
FIG. 10 illustrates a DFT matrix (part 1) including four rows and four columns;
FIG. 11 illustrates a DFT matrix (part 2) including four rows and four columns;
FIG. 12 illustrates a DFT matrix (part 3) including four rows and four columns;
FIG. 13 illustrates a DFT matrix including N rows and N columns;
FIG. 14 illustrates a transmitter (part 1);
FIG. 15 illustrates a transmitter (part 2);
FIG. 16 illustrates an example of a pseudo periodic sequence where $a_4 (t)$ is repeated six times in the pattern of a2 (t);
FIG. 17 illustrates an example of a complete complementary sequence;
FIG. 18 illustrates examples of ZCZ sequences; and
FIG. 19 illustrates an example of a matched filter of 1, 1, 1, -1, 0, 0, 0, 0, 0, 1, -1, 1, 1.

DESCRIPTION OF THE REFERENCE NUMBERS

[0026]

| | |
|---|---|
| 10 | transmitter |
| 11 | encoding unit |
| 12 | pilot signal adding unit |
| 13, 51, 61 | pseudo periodic sequence generating unit |
| 14, 52, 62 | spread unit |
| 15, 53, 63 | modulating unit |
| 16, 21 | antenna |
| 17, 25, 55, 65 | spread sequence generating unit |

| 18, 23, 56, 66 | oscillator |
|---|---|
| 20 | receiver |
| 22 | demodulating unit |
| 24 | multipath property measuring unit |
| 26 | multipath removing unit/using unit |
| 27 | matched filter |
| 28 | decoding unit |
| 31, 32 | wireless communication apparatus |
| 41 | transmission signal a(t) |

## BEST MODE FOR CARRYING OUT THE INVENTION

The present invention is applied to a wireless communication system including plural wireless communication apparatuses. According to the present invention, each of the wireless communication apparatuses includes a transmitter including a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted. Each of the wireless communication apparatuses includes a receiver including a demodulating unit configured to demodulate a reception wave modulated with the carrier frequency and the transmission sequence to be transmitted includes a pilot signal used for measuring multipath properties and a transmission data signal. Furthermore,

(1) the wireless communication apparatuses transmit different carrier frequencies, and
(2) the (pseudo) periodic sequence generating unit sequentially multiples the transmission sequence to be transmitted by a vector component of a predetermined DFT matrix to generate the periodic sequence.

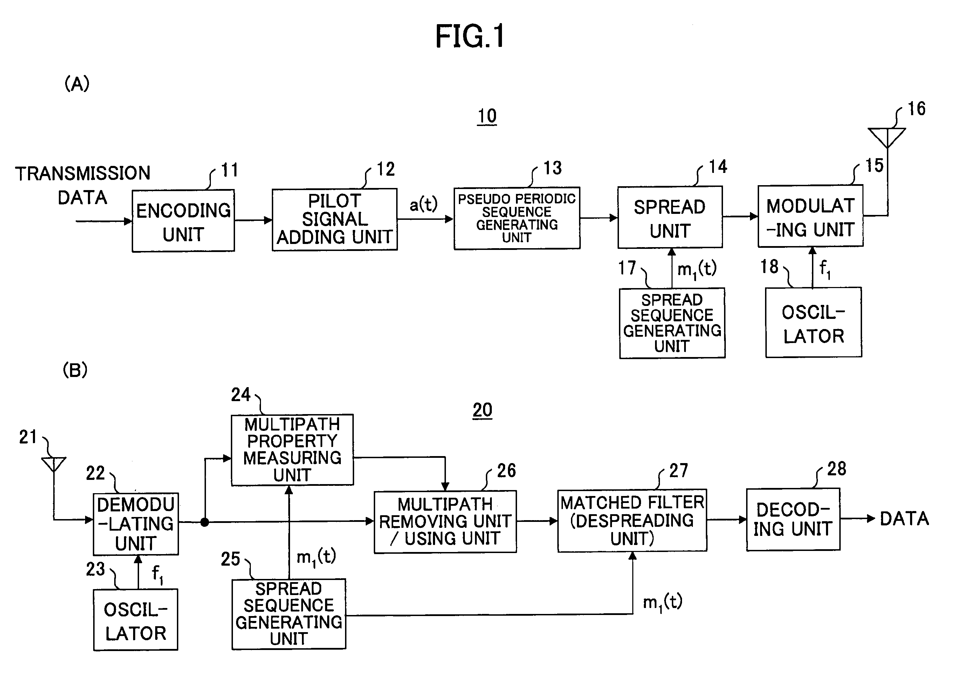

An example of a wireless communication system according to the present invention is described with reference to FIG. 1. FIG. 1(A) illustrates a transmitter 10 on the transmitting side in the wireless communication system. FIG. 1(B) illustrates a receiver 20, which is a wireless communication apparatus on the receiving side in the wireless communication system.

The transmitter 10 illustrated in FIG. 1(A) includes an encoding unit 11, a pilot signal adding unit 12, a pseudo periodic sequence generating unit 13, a spread unit 14, a modulating unit 15, an antenna 16, a spread sequence generating unit 17, and an oscillator 18. The process order of the pseudo periodic sequence generating unit 13 and the spread unit 14 can be reversed. The present invention can be implemented without the spread unit 14 or the spread sequence generating unit 17.

Transmission data, which is digital data, is encoded at the encoding unit 11. At the pilot signal adding unit 12, a pilot signal for measuring multipath properties is added to the transmission data. It is also possible to use an error correcting code as the transmission data.

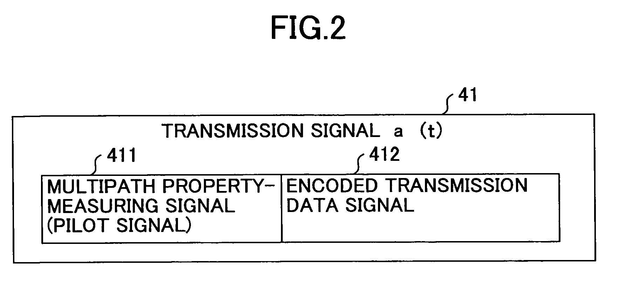

FIG. 2 illustrates a transmission signal sequence a(t), which is a discrete time signal to which the pilot signal for measuring multipath properties is added at the pilot signal adding unit 12. The transmission signal sequence a(t) includes a multipath property-measuring signal 411 and an encoded transmission data signal 412.

Accordingly, the signal sequence a(t) is expressed by an equation (4) as follows:

$$\mathrm{a}\ (\mathrm{t})\ =\sum_{n=0}^{N-1}a_n\bigl(t-nT\bigr)\qquad\cdot\cdot\cdot(4)$$

where a(t) is a signal including the pilot signal for measuring multipath properties and the transmission data signal. In the present invention, the pilot signal for measuring multipath properties can be added in any manner that is not limited to the example shown in FIG. 2.

In the following description, $a_0(t)$, $a_1(t-T)$, $a_2(t-2T)$, ··, $a_{N-1}(t-(N-1)T)$ are expressed as $a_0$, $a_1$, $a_2$, ··, $a_{N-1}$, respectively.

At the pseudo periodic sequence generating unit 13, the transmission signal a(t) including the pilot signal for measuring multipath properties is repeated for a predetermined number of times so as to generate a periodic sequence. For example, the transmission signal a(t) is repeated four times to generate a signal $a(t)_1$ shown in FIG. 3A. Between the transmission signal a(t) and the transmission signal a(t), there is a period without a transmission signal. However, such a period can be omitted.

The spread unit 14 spreads the spectrum of the output signals from the pseudo periodic sequence generating unit 13 by using a predetermined spread signal ($m_1(t)$) generated by the spread sequence generating unit 17. The modulating unit 15 shifts the frequency of the spectrum-spread signals output from the spread unit 14, by multiplying the signals by a frequency $f_1$ of the oscillator 18. The spread signal ($m_1(t)$) is expressed by an equation (5) as follows:

$$m_1(t) = \sum_{n=0}^{N-1} m_{1_n}(t - nT) \qquad \cdots (5)$$

which has the same timing and the same sequential length (length N, time T) as the transmission signal sequence a(t). Accordingly, each sequence a(t) is spread by the spread signal ($m_1(t)$). Signals of an M sequence or a ZCZ sequence can be used as the spread signal.

The receiver 20 shown in FIG. 1B includes an antenna 21, a demodulating unit 22, an oscillator 23, a multipath property measuring unit 24, a spread sequence generating unit 25, a multipath removing unit/using unit 26, a matched filter (despreading unit) 27, and a decoding unit 28. The spread sequence generating unit 25 generates the same spread signal as the spread signal ($m_1(t)$) of the spread sequence generating unit 17 in the transmitter 10.

The demodulating unit 22 outputs a base-band signal by multiplying a reception wave received by the antenna 21 by a frequency $f_1$ of the oscillator 23 and demodulating the reception wave. The base-band signal output from the demodulating unit 22 is supplied to the multipath property measuring unit 24. In the multipath property measuring unit 24, the pilot signal for measuring multipath properties is extracted from the base-band signal by using the predetermined spread signal ($m_1(t)$) from the spread sequence generating unit 25. Furthermore, the multipath properties of the transmission line are estimated based on the extracted pilot signal.

In the multipath removing unit/using unit 26, multipath components in the base-band signal are removed or used based on the multipath properties estimated by the multipath property measuring unit 24. For example, the multipath removing unit/using unit 26 can simply remove the multipath components from the base-band signal based on the multipath properties estimated by the multipath property measuring unit 24, or combine plural multipath signals as in RAKE reception. In any case, multipath components are excluded from the signal output from the multipath removing unit/using unit 26, so that the signal is not affected by multipath waves. The signal from which multipath components are removed is supplied to the matched filter 27, so that a despreading operation is performed. The decoding unit 28 decodes the signal output from the matched filter 27, and outputs the reception data.

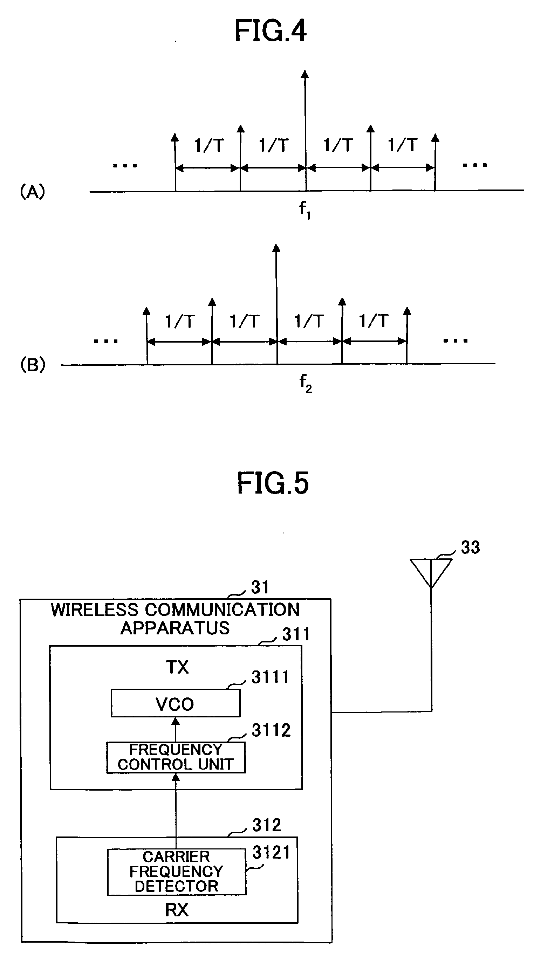

Incidentally, in the transmitter 10 that has the carrier frequency $f_1$, the transmission signal a(t) is repeated for each period T for four times as shown in FIG. 3(A), and transmitted from the antenna 16. If the transmission signal a(t) is repeated for each period T (ideally repeated infinitely) and transmitted from the antenna 16, the spectrum becomes a comb-form spectrum, as shown in FIG. 4(A), with a transmission signal a(t) rising every 1/T with respect to the frequency $f_1$.

When another transmitter having a carrier frequency $f_2$ repeats the transmission signal a(t) for each period T for four times as shown in FIG. 3(A) and transmits the signals, the spectrum becomes a comb-form spectrum, as shown in FIG. 4(B), with a transmission signal a(t) rising every 1/T with respect to the frequency $f_2$.

Thus, the following equation is satisfied:

$$\Delta f = f1 - f2 \qquad \cdots (6)$$

Assuming that $\Delta f$ is 1/2 of 1/T, the spectrum shown in FIG. 4(B) is located in the middle of the spectrum shown in FIG. 4(A). Assuming that $\Delta f$ is 1/4 of 1/T, the spectrum shown in FIG. 4(B) is located at a position displaced by 1/4 with respect to the spectrum shown in FIG. 4(A).

By adjusting $\Delta f$ in such a manner, it is possible to perform a plurality of communications without interference.

In order to realize a wireless communication apparatus capable of performing plural communications without interference, a wireless communication apparatus shown in FIG. 5 is employed, for example.

A wireless communication apparatus 31 shown in FIG. 5 includes a transmitter 311 and a receiver 312. The transmitter 311 includes a variable frequency oscillator VCO 3111 for determining a carrier frequency and a frequency control unit 3112 for controlling the frequency of the VCO. The receiver 312 includes a carrier frequency detector 3121 for detecting the carrier frequency used by other wireless communication apparatuses.

The frequency control unit 3112 controls the variable frequency oscillator VCO 3111 based on the output of the carrier frequency detector 3121, so that the transmitter 311 outputs a carrier frequency that is not used by another wireless communication apparatus. The frequency control unit 3112 can control the variable frequency oscillator VCO 3111 based on the equation (3).

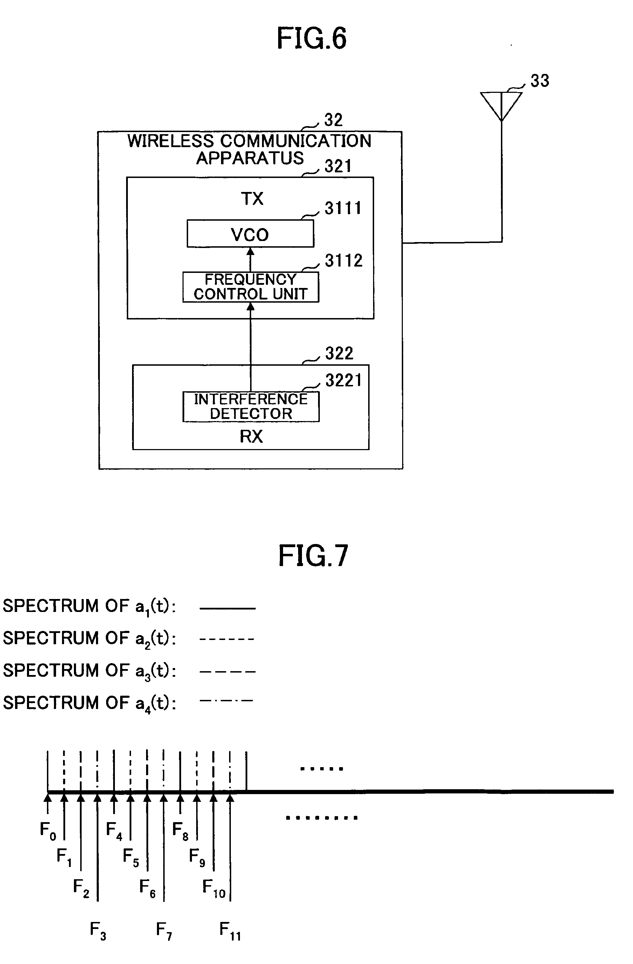

A wireless communication apparatus shown in FIG. 6 can also be employed.

A wireless communication apparatus 32 shown in FIG. 6 includes a transmitter 321 and a receiver 322. The transmitter 321 includes a variable frequency oscillator VCO 3211 for determining a carrier frequency and a frequency control unit 3212 for controlling the frequency of the VCO. The receiver 322 includes an interference detector 3221 for detecting interference status.

The frequency control unit 3212 controls the variable frequency oscillator VCO 3211 based on the output of the interference detector 3221, so that the transmitter 321 outputs a carrier frequency that is not used by another wireless communication apparatus. The frequency control unit 3212 can control the variable frequency oscillator VCO 3211 based on the equation (3). The frequency control unit 3212 can control the variable frequency oscillator VCO 3211 so that the output signals are switched among a signal a $(t)_1$, a signal a $(t)_2$, a signal a $(t)_3$, and a signal a $(t)_4$.

The receiver 20 receives a comb-form spectrum with signals rising every 1/T. If transmission signals a(t) for each period T are infinitely transmitted, a comb-form spectrum with signals rising every 1/T can be received. However, in the present embodiment, transmission signals a(t) for each period T are repeatedly transmitted only four times, and therefore, a complete comb-form spectrum cannot be received.

In the receiver 20, the matched filter 27 having a length of N (the time length being 4T) performs autocorrelation on a signal excluding multipath components. Accordingly, the signals are assumed as and processed as a pseudo complete comb-form spectrum.

The length of the matched filter 27 can be 2N, 3N, or 4N. With these lengths, the matched filter 27 processes the spectrum as a complete comb-form spectrum for a shorter time duration, but the correlation can be performed more precisely.

Next, an invention for reducing co-channel interference is described, in which a periodic sequence generating unit is used to generate a periodic sequence by sequentially multiplying the transmission sequence to be transmitted, by a vector component of a DFT matrix. In this case, the carrier frequencies transmitted by different wireless communication apparatuses do not need to be different.

The four signals shown in FIG. 3, the signal $a_1(t)$, the signal $a_2(t)$, the signal $a_3(t)$, and the signal $a_4(t)$ are calculated so that spectrums are sequentially generated at different positions, as shown in FIG. 7.

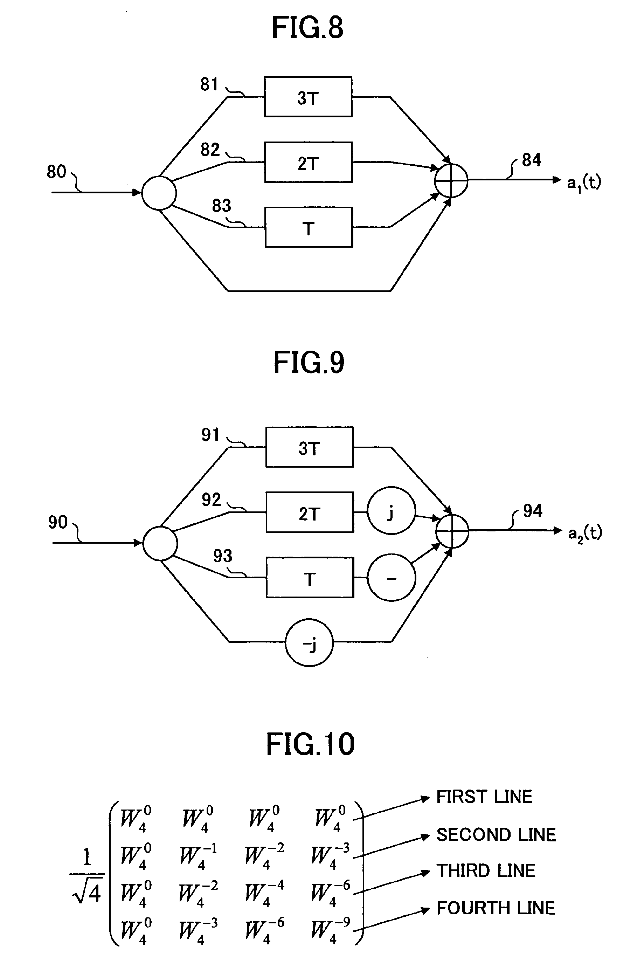

Based on units of a signal length T, the signal $a_1(t)$ is a signal that has passed through a filter with properties of (1, 1, 1, 1) shown in FIG. 8, $a_2(t)$ is a signal that has passed through a filter with properties of (1, j, -1, -j) shown in FIG. 9, $a_3(t)$ is a signal that has passed through a filter with properties of (1, -1, 1, -1), and $a_4(t)$ is a signal that has passed through a filter with properties of (1, -j, -1, j).

Assuming that the following equation (7) is satisfied,

$$W_4^1 = \exp\frac{2\pi\sqrt{-1}}{4} \qquad \cdots (7)$$

a DFT matrix of four rows and four columns is shown in FIG. 10. W corresponds to a rotator, and the following equations (8) and (9) are satisfied.

$$W_4^0 = e^{-j2\pi} = 1 \quad \cdots (8)$$

$$W_4^{k+4} = W_4^{k+8} = \cdots = W_4^k \quad \cdots (9)$$

Referring to FIG. 10, the following equations (10) - (16) are satisfied.

$$W_4^0 = 1 \qquad \cdots (10)$$

$$W_4^1 = \exp\frac{2\pi\sqrt{-1}}{4} = \quad \cdots (11)$$

$$W_4^2 = (\exp\frac{2\pi\sqrt{-1}}{4} \times 2) \quad \cdots (12)$$

$$W_4^3 = (\exp\frac{2\pi\sqrt{-1}}{4} \times 3) \quad \cdots (13)$$

$$W_4^4 = (\exp\frac{2\pi\sqrt{-1}}{4} \times 4) = W_4^0 = 1 \quad \cdots (14)$$

$$W_4^6 = (\exp\frac{2\pi\sqrt{-1}}{4} \times 6) = W_4^2 = \exp\frac{2\pi\sqrt{-1}}{4} \times 2 \quad \cdots (15)$$

$$W_4^9 = (\exp\frac{2\pi\sqrt{-1}}{4} \times 9) = W_4^1 = \exp\frac{2\pi\sqrt{-1}}{4} \quad \cdots (16)$$

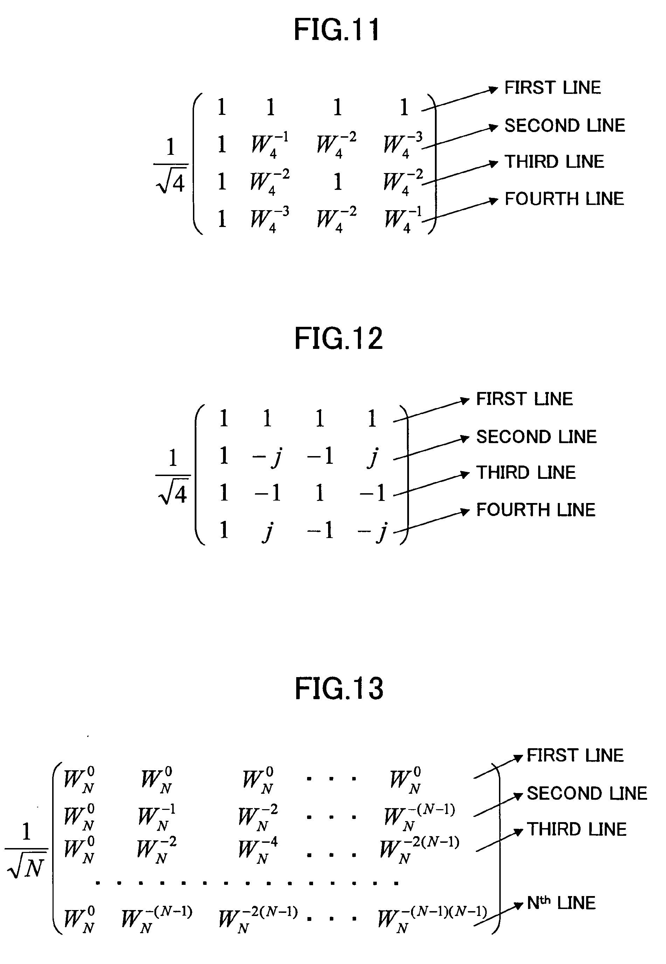

Thus, the matrix shown in FIG. 10 can be expressed as the matrix as shown in FIG. 11. Furthermore, the following equations (17) - (20) are satisfied.

$$W_4^0 = 1 \quad \cdots (17)$$

$$W_4^{-3} = W_4^1 = \exp\frac{2\pi\sqrt{-1}}{4} = j \cdots (18)$$

$$W_4^{-2} = W_4^2 = (\exp\frac{2\pi\sqrt{-1}}{4} \times 2) = -1 \cdots (19)$$

$$W_4^{-1} = W_4^3 = (\exp\frac{2\pi\sqrt{-1}}{4} \times 3) = -j \cdots (20)$$

Accordingly, the matrix shown in FIG. 11 can be expressed as shown in FIG. 12.
Assuming that
vector a=(a(1), a(2), a(3), a(4)),
vector $a_1$=(a(1), a(2), a(3), a(4), a(1), a(2), a(3), a(4), a(1), a(2), a(3), a(4), a(1), a(2), a(3), a(4)),
vector $a_2$=(a(1), a(2), a(3), a(4), -ja(1), - ja(2), -ja(3), -ja(4), -a(1), -a(2), -a(3), -a(4), a(1), a(2), a(3), a(4)),
vector $a_3$=(a(1), a(2), a(3), a(4), -a(1), - a(2), -a(3), -a(4), a(1), a(2), a(3), a(4), -a(1), -a(2), -a(3), -a(4)), and

vector $a_4$=(a(1), a(2), a(3), a(4), ja(1), ja(2), ja(3), ja(4), -a(1), -a(2), -a(3), -a(4), -ja(1), -ja(2), -ja(3), -ja(4)), the following equation is satisfied.

$$\begin{bmatrix} \text{vector } a_1 \\ \text{vector } a_2 \\ \text{vector } a_3 \\ \text{vector } a_4 \end{bmatrix} = \begin{bmatrix} 1 & 1 & 1 & 1 \\ 1 & -j & -1 & j \\ 1 & -1 & 1 & -1 \\ 1 & j & -1 & -j \end{bmatrix} \otimes \text{vector } a \cdots (21)$$

The four signals $a_1$ (t), $a_2$ (t), $a_3$ (t), and $a_4$ (t) correspond to vector $a_1$, vector $a_2$, vector $a_3$, and vector $a_4$, and a(t) corresponds to vector a.

By using the vectors in the DFT matrix of four lines and four rows shown in FIG. 12, a1 (t) is generated by the four signals of a(t) and the vector in the first line of the DFT matrix of four lines and four rows; a2(t) is generated by the four signals of a(t) and the vector in the second line of the DFT matrix of four lines and four rows; a3(t) is generated by the four signals of a(t) and the vector in the third line of the DFT matrix of four lines and four rows; and a4(t) is generated by the four signals of a(t) and the vector in the fourth line of the DFT matrix of four lines and four rows.

In the case of N sequences, the vector components in each line of the DFT matrix of N lines and N rows shown in FIG. 13 can be sequentially used to generate a periodic sequence.

The following description is made with reference to a transmitter shown in FIG. 14 and a transmitter shown in FIG. 15.

In the transmitter shown in FIG. 14, the transmission signal $a_1$(t) shown in FIG. 3(A) is generated by a pseudo periodic sequence generating unit 51. A spread unit 52 spreads the spectrum of the transmission signal $a_1$(t) by using a predetermined spread signal ($m_1$ (t)) generated by a spread sequence generating unit 55. A modulating unit 53 shifts the frequency of the spectrum-spread signal output from the spread unit 52, by multiplying the signal by a frequency $f_1$ of an oscillator 56. The present invention can be implemented without the spread unit 52.

In the transmitter shown in FIG. 15, the transmission signal $a_2$(t) shown in FIG. 3(B) is generated by a pseudo periodic sequence generating unit 61. A spread unit 62 spreads the spectrum of the transmission signal $a_2$(t) by using a predetermined spread signal ($m_1$(t)) generated by a spread sequence generating unit 65. A modulating unit 63 shifts the frequency of the spectrum-spread signal output from the spread unit 62, by multiplying the signal by a frequency $f_1$ of an oscillator 66. In this example, it is assumed that the frequency of the oscillator shown in FIG. 14 is the same as the frequency of the oscillator shown in FIG. 15. The present invention can be implemented without the spread unit 62.

The signal transmitted from the transmitter shown in FIG. 14 and the signal transmitted from the transmitter shown in FIG. 15 are spread by the same spread codes and transmitted by the same carrier frequency $f_1$, and therefore, it appears that interference may be caused therebetween. However, the spectrum of the signal $a_1$(t) transmitted from the transmitter shown in FIG. 14 and the spectrum of the signal $a_2$(t) transmitted from the transmitter shown in FIG. 15 are rising at different positions as shown in FIG. 7. Accordingly, interference is not caused.

Similarly, even if the signal $a_3$(t) and the signal $a_4$(t) are spread by the same spread code ($m_1$(t)) and transmitted by the same carrier frequency $f_1$, no interference occurs between the four signals $a_1$(t), $a_2$(t), $a_3$ (t), and $a_4$ (t).

Each of the four signals $a_1$ (t), $a_2$ (t), $a_3$ (t), and $a_4$ (t) are patterns in which the signal a(t) is repeated four times. However, the present invention is not limited thereto. For example, FIG. 16 illustrates an example of a pseudo periodic sequence where a(t) is repeated six times following the pattern of $a_2$ (t). The number 72 denotes a basic portion, which is the same as $a_2$(t). Extended portions 71, 72 are provided before and after the basic portion 72, respectively. The extended portion 71 corresponds to -ja(t) and the extended portion 72 corresponds to a(t). In this manner, the signal can be extended following the pattern of $a_2$ (t). The signal can be repeated an arbitrary number of times. In the example shown in FIG. 16, the extended portions are provided both before and after the basic portion; however, an extended portion can be provided only before or only after the basic portion.

The length of the matched filter of the receiving apparatus is 4T. While the correlation signal process is performed within this range, the signals are assumed as and processed as a pseudo complete comb-form spectrum.

It is ensured that the spectrum is separated by expanding the signal in the above manner, so that communications are performed accurately.

Next, a description is given of a spread sequence generated in the spread sequence generating unit. An autocorrelation sequence is a sequence that becomes zero at all shifts other than where the sum of the autocorrelation function of N sequences is a zero shift. In mutually complementary sequences, there are two sets of sequences each including N sequences numbered from one to N. If the sums of cross-correlation functions (N functions) of sequences having the same number become zero at all shifts, the two sequence sets are defined as mutually complementary sequence sets.

In a complete complementary sequence of N digits, there are two sets of sequences each including N sequences numbered from one to N, and among the N pairs of sequences, two arbitrary sequences are mutually complementary sequences. FIG. 17 illustrates an example of a complete complementary sequence with eight digits.

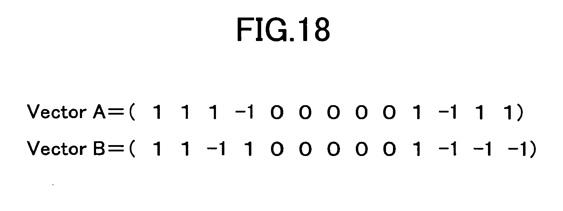

A one-dimensional sequence in which an autocorrelation function and a cross-correlation function become zero in a particular range is referred to as a ZCZ (zero correlation zone) sequence. FIG. 18 illustrates two ZCZ sequences generated from the complete complementary sequence with eight digits shown in FIG. 7.7. Two ZCZ sequences can be generated from a complete complementary sequence including four sets, and four ZCZ sequences can be generated from a complete complementary sequence including 16 sets. There can be any number of "zeros" included in the ZCZ sequences as long as the same number of "zeros" are included in a vector A and a vector B.

The ZCZ sequence becomes a spread code.

If the signal A shown in FIG. 18 is applied to a matched filter of signal A, the following output can be obtained. 000000080000000

If the signal A is applied to a matched filter of signal B, the following output can be obtained. 000000000000000

If the signal B shown in FIG. 18 is applied to a matched filter of signal B, the following output can be obtained. 000000080000000

If the signal B is applied to a matched filter of signal A, the following output can be obtained. 000000000000000

Therefore, the signal A that is the vector A and the signal B that is the vector B can be used as spread sequences.

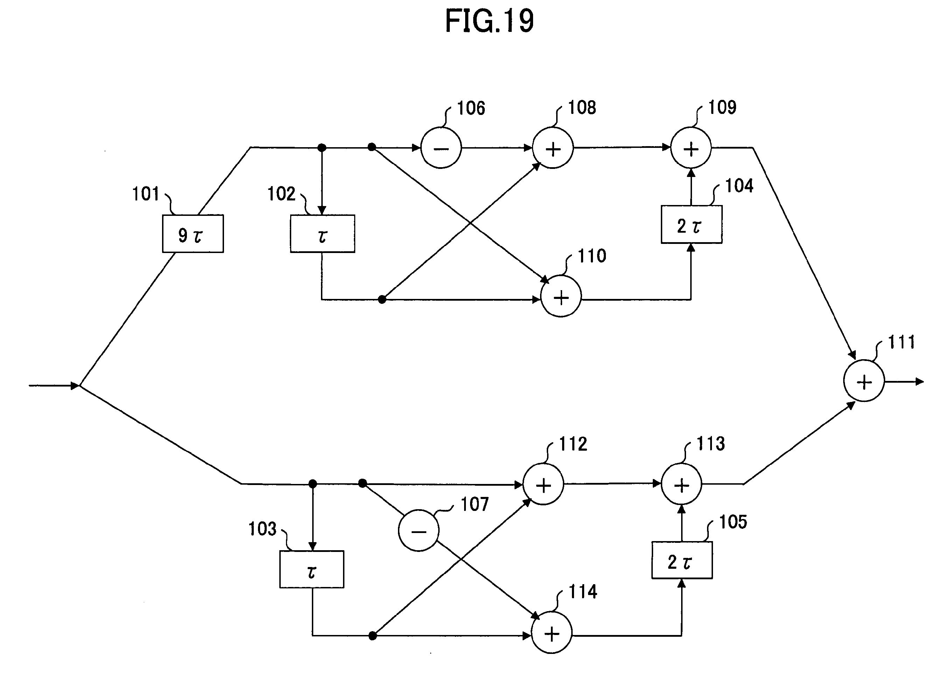

That is, if a sequence generated by the spread sequence generating unit 17 of the transmitter 10 shown in FIG. 1 is the signal A shown in FIG. 19, and "1" is considered among the output from the periodic sequence generating unit 13, the "1" is spread so as to obtain a signal of 1, 1, 1, -1, 0, 0, 0, 0, 0, 1, -1, 1, 1. If the sequence generated by the spread sequence generating unit 25 of the receiver 20 shown in FIG. 1 is the signal A shown in FIG. 19, the signal is despread at the matched filter 27 and "1" is output.

In a case where the multipath properties are (1, 0, -1/2, 0, j/4, 0), the signal "1" in the pilot signal for measuring multipath properties output from the periodic sequence generating unit 13 is despread at the multipath property measuring unit 24 and 000000080-402j000 is output. The multipath property measuring unit 24 compares this output with an output 000000080000000 obtained when there are no multipath properties. As a result of the comparison, it is estimated that the multipath properties are (1, 0, -1/2, 0, j/4, 0).

FIG. 19 illustrates an example of a matched filter for 1 1 1 -1 0 0 0 0 0 1 -1 1 1.

The matched filter shown in FIG. 19 includes a delaying element 101 for delaying the time by $9\tau$, delaying elements 102, 103 for delaying the time by $\tau$, delaying elements 104, 105 for delaying the time by $2\tau$, inverse elements 106, 107, and addition elements 108, 109, 110, 111, 112, 113, and 114.

Next, a description is given of a method of receiving signals in a case where the receiving side is informed of the DFT matrix $F_N$ used by the pseudo periodic sequence generating unit of the transmitting side and the length of the transmission signal sequence.

It is assumed that the transmission signal sequence of the transmitting side is $A(a_0 a_1 ... a_M)$, and the DFT matrix $F_N$ used by the pseudo periodic sequence generating unit of the transmitting side is the following:

$$F_N = \begin{bmatrix} \text{vector } f_0 \\ \text{vector } f_1 \\ \cdot \\ \cdot \\ \cdot \\ \text{vector } f_{N-1} \end{bmatrix} \quad \cdots (22)$$

The following description is based on the assumption that the transmitting side generates and transmits a pseudo periodic sequence of a transmission signal sequence A based on a vector $f_X \otimes A$ ($0 \leq X \leq N-1$).

For simplification, a case where M=3, N=4, and X=2 is described herein.

The following data $A_0$, $A_1$ and $A_2$ are to be transmitted.

$A_0 = (a_{00}, a_{01}, a_{02}, a_{03})$
$A_1 = (a_{10}\ a_{11}, a_{12}, a_{13})$

$A_2=(a_{20}, a_{21}, a_{22}, a_{23})$

Assuming that data $A_2$ is to be transmitted, a vector $f_2 \otimes A_2$ is obtained.

$$\text{vector } f_2 \otimes A_2 = (W_3^0 a_{20}, \quad W_3^0 a_{21}, \quad \cdots, \quad W_3^2 a_{22}, \quad W_3^2 a_{23})$$

This vector is turned into a pseudo period so as to obtain a transmission signal.

There are four equations for four unknown values, and therefore, the received data $A_2(a_{20}, a_{21}, a_{22}, a_{23})$ can be obtained.

In the above embodiment, it is described that the spread signal ($m_1$ (t)) has the same timing and the same sequential length (length N) as the transmission signal sequence a(t). However, the spread signal ($m_1$ (t)) can be a spread signal sequence having a harmonic relationship with the transmission signal sequence a(t).

For example, the timing at which the spread signal ($m_1$ (t)) is generated can be 1/M with respect to the timing of the transmission signal sequence a(t), and the spread signal ($m_1$(t)) can have NM sequences within a time T.

In the above embodiment, the frequency of the oscillator shown in FIG. 14 is the same as the frequency of the oscillator shown in FIG. 15. However, the frequency of the oscillator shown in FIG. 14 and the frequency of the oscillator shown in FIG. 15 do not have to be the same.

In the present invention, the pilot signals for measuring multipath properties are repeatedly transmitted together with the transmission data signals. Therefore, it is ensured that the receiving apparatus receives the pilot signals for measuring multipath properties, thus ensuring that communications are properly performed.

Zero correlation zone sequences can be used as the spread sequences or the pilot signals for measuring multipath properties.

Furthermore, in the present invention, transmission data signals are repeatedly transmitted, and therefore, although the data transmission speed decreases, interference can be reduced, thus ensuring that communications are properly performed.

The present application is based on Japanese Priority Patent Application No. 2004-346820, filed on November 30, 2004, the entire contents of which are hereby incorporated by reference.

## Claims

1. A wireless communication system comprising plural wireless communication apparatuses, wherein:

    each of the wireless communication apparatuses comprises a transmitter comprising a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted;
    each of the wireless communication apparatuses comprises a receiver comprising a demodulating unit configured to demodulate a reception wave modulated with the carrier frequency;
    the transmission sequence to be transmitted comprises a pilot signal used for measuring multipath properties and a transmission data signal; and
    the wireless communication apparatuses transmit different said carrier frequencies.

2. The wireless communication system according to claim 1, wherein:

    the transmitter of each of the wireless communication apparatuses comprises a frequency control unit configured to change the carrier frequency and the receiver of each of the wireless communication apparatuses comprises a carrier frequency detector configured to detect a carrier frequency used by another wireless communication apparatus; and
    the frequency control unit controls the carrier frequency of the wireless communication apparatuses in which the frequency control unit is provided so as to cause said carrier frequency to be different from a carrier frequency used by another wireless communication apparatus.

3. The wireless communication system according to claim 1, wherein:

    the transmitter of each of the wireless communication apparatuses comprises a frequency control unit configured to change the carrier frequency and the receiver of each of the wireless communication apparatuses comprises an interference detector configured to detect interference status; and

the frequency control unit controls the carrier frequency of the wireless communication apparatuses in which the frequency control unit is provided so as to cause said carrier frequency to be different from a carrier frequency used by another wireless communication apparatus based on output from the interference detector.

4. A wireless communication system comprising plural wireless communication apparatuses, wherein:

each of the wireless communication apparatuses comprises a transmitter comprising a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted;

each of the wireless communication apparatuses comprises a receiver comprising a demodulating unit configured to demodulate a reception wave modulated with the carrier frequency;

the transmission sequence to be transmitted comprises a pilot signal used for measuring multipath properties and a transmission data signal; and

the pseudo periodic sequence generating unit sequentially multiples the transmission sequence to be transmitted by a vector component of a predetermined DFT matrix to generate the periodic sequence.

5. The DFT matrix $F_N$ used by the pseudo periodic sequence generating unit is expressed as

this signal is received with a reception filter of a vector $f_2 \otimes (1000)$, which is a matched filter of the vector $f_2 \otimes (1000)$ = $(W^0_3 000 W^0_3 000 W^0_3 W000)$, to obtain a correlation therebetween so that the transmitted data $A_2$ ($a_{20}$, $a_{21}$, $a_{22}$, $a_{23}$) is obtained.

However, if the signal is received with a matched filter of a vector $f_2 \otimes (0100)=(0W^0_3 000 W^0_3 000 W^0_3 000 W^0_3 00)$, an output becomes $3(W^1_3 a_{20}, a_{21}, a_{22}, a_{23})$,

if the signal is received with a matched filter of a vector $f_2 \otimes (0010)=(00W^0_3 000 W^0_3 000 W^0_3 000 W^0_3 0)$, an output becomes $3(W^1_3 a_{20}, W^1_3 a_{21}, a_{22}, a_{23})$, and

if the signal is received with a matched filter of a vector $f_2 \otimes (0001)=(000 W^0_3\ 000 W^0_3 000 W^0_3 000 W^0_3)$, an output becomes $3(W^1_3 a_{20}, W^1_3 a_{21}, W^1_3 a_{22}, a_{23})$.

Therefore, by receiving the signal with a matched filter of $f_2 \otimes B(b_0 b_1 b_2 b_3)$ on the receiving side, the output $y(y_0, y_1, y_2, y_3)$ becomes

$$y=3b_0(a_{20}, \ a_{21}, \ a_{22}, \ a_{23})+3b_1(a_{21}, \ a_{22}, \ a_{23},$$

$$W^1_3 a_{20})+3b_2(a_{22}, \ a_{23}, \ W^1_3 a_{20}, \ W^1_3 a_{21},+3b_3(a_{23}, \ W^1_3 a_{20}, \ W^1_3 a_{21},$$

$$W^1_3 a_{22},)\cdots(23).$$

Accordingly, the following can be obtained.

$$y_0=3(a_{20}+a_{21}+a_{22}+a_{23})\cdots(24)$$

$$y_0=3(a_{21}+a_{22}+a_{23}+W^1_3 a_{20})\cdots(25)$$

$$y_0=3(a_{22}+a_{23}+W^1_3 a_{20}+W^1_3 a_{21})\cdots(26)$$

$$y_0=3(a_{23}+W^1_3 a_{20}+W^1_3 a_{21}+W^1_3 a_{22})\cdots(27)$$

6. The wireless communication system according to claim 1 or 4, wherein:

the transmitter of each of the wireless communication apparatuses comprises a periodic sequence control unit configured to control a manner of repeating the periodic sequence generated by the pseudo periodic sequence generating unit and the receiver of each of the wireless communication apparatuses comprises an interference detector configured to detect interference status; and
the periodic sequence control unit controls the manner of repeating the periodic sequence generated by the pseudo periodic sequence generating unit based on output from the interference detector in such a manner to mitigate interference.

7. The wireless communication system according to claim 1 or 4, wherein:

the pseudo periodic sequence generating unit uses any one of filters having properties of (1, 1, 1, 1), (1, j, -1, -j), (1, -1, 1, -1), (1, -j, -1, j) to generate the periodic sequence.

8. The wireless communication system according to claim 1 or 4, wherein:

the spread sequence or the pilot signal used for measuring the multipath properties comprises a zero correlation zone sequence.

9. The wireless communication system according to claim 1 or 4, wherein:

the wireless communication system comprises a mobile communication system.

10. The wireless communication system according to claim 1 or 4, wherein:

the wireless communication system comprises a wireless LAN communication system.

11. A wireless communication method performed in a wireless communication system comprising plural wireless communication apparatuses, the wireless communication method comprising:

a transmitting step and a receiving step; wherein:

the transmitting step comprises a periodic sequence generating step of generating a periodic sequence in which a transmission sequence to be transmitted is repeated a predetermined number of times and a modulating step of modulating, with a carrier frequency, the transmission sequence to be transmitted;
the receiving step comprises a demodulating step of demodulating a reception wave modulated with the carrier frequency;
the transmission sequence to be transmitted comprises a pilot signal used for measuring multipath properties and a transmission data signal; and
the wireless communication apparatuses transmit different said carrier frequencies at different timings.

12. A wireless communication method performed in a wireless communication system comprising plural wireless communication apparatuses, the wireless communication method comprising:

a transmitting step and a receiving step; wherein:

the transmitting step comprises a spreading step of spreading a transmission sequence to be transmitted with a predetermined spread sequence, a periodic sequence generating step of generating a periodic sequence in which the transmission sequence to be transmitted is repeated a predetermined number of times, and a modulating step of modulating, with a carrier frequency, the transmission sequence to be transmitted;
the receiving step comprises a demodulating step of demodulating a reception wave modulated with the carrier frequency and a despreading step of despreading the spread signal sequence;
the transmission sequence to be transmitted comprises a pilot signal used for measuring multipath properties and a transmission data signal; and
the periodic sequence generating step comprises a step of sequentially multiplying the transmission sequence to be transmitted by a vector component of a predetermined DFT matrix to generate the periodic sequence.

**13.** The wireless communication system according to claim 4, wherein:

the DFT matrix $F_N$ used by the pseudo periodic sequence generating unit is expressed as

$$F_N = \begin{bmatrix} \text{vector } f_0 \\ \text{vector } f_1 \\ \cdot \\ \cdot \\ \cdot \\ \text{vector } f_{N-1} \end{bmatrix} \quad \cdot \cdot \cdot (28)$$

where the transmission signal sequence is $A(a_0 a_1 ... a_M)$, wherein:

with the transmission signal sequence $A(a_0 a_1 \cdots a_M)$ and a vector $f_x$ ($0 \leq X \leq N-1$), a pseudo periodic sequence of the transmission signal sequence A based on a vector $f_x \otimes A$ is generated and transmitted, wherein:

assuming that a known signal sequence $B(b_0 b_1 \cdots b_M)$ has the same length as the transmission signal sequence,
the received pseudo periodic sequence of the transmission signal sequence A is applied to a matched filter of a vector $f_x \otimes B$ to obtain the transmission signal sequence from output of the matched filter.

**14.** The wireless communication method according to claim 12, wherein the periodic sequence is generated at the periodic sequence generating step by using any one of filters having properties of (1, 1, 1, 1), (1, j, -1, -j), (1, -1, 1, -1), (1, -j, -1, j).

**15.** The wireless communication method according to claim 12, wherein:

the spread sequence or the pilot signal used for measuring the multipath properties is a zero correlation zone sequence.

**16.** A communication apparatus comprising a transmitter and a receiver, wherein:

the transmitter comprises a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted;
the receiver comprises a demodulating unit configured to demodulate a reception wave modulated with the carrier frequency;
the transmission sequence to be transmitted comprises a pilot signal used for measuring multipath properties and a transmission data signal; and
the wireless communication apparatuses transmit different said carrier frequencies.

**17.** A communication apparatus comprising a transmitter and a receiver, wherein:

the transmitter comprises a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted;
the receiver comprises a demodulating unit configured to demodulate a reception wave modulated with the carrier frequency;
the transmission sequence to be transmitted comprises a pilot signal used for measuring multipath properties and a transmission data signal; and
the pseudo periodic sequence generating unit sequentially multiples the transmission sequence to be transmitted by a vector component of a predetermined DFT matrix to generate the periodic sequence.

**18.** The wireless communication system according to claim 12, wherein:

the DFT matrix $F_N$ used by the pseudo periodic sequence generating unit is expressed as

$$F_N = \begin{bmatrix} \text{vector } f_0 \\ \text{vector } f_1 \\ \cdot \\ \cdot \\ \cdot \\ \text{vector } f_{N-1} \end{bmatrix} \quad \cdot\cdot\cdot (29)$$

where the transmission signal sequence is A $(a_0 a_1, ... a_M)$, wherein:

with the transmission signal sequence A $(a_0 a_1 ... a_M)$ and a vector fx $(0 \le X \le N-1)$, a pseudo periodic sequence of the transmission signal sequence A based on a vector $f_x \otimes A$ is generated and transmitted, wherein:

assuming that a known signal sequence $B(b_0 b_1 \cdots b_M)$ has the same length as the transmission signal sequence,
the received pseudo periodic sequence of the transmission signal sequence A is applied to a matched filter of a vector $f_x \otimes B$ to obtain the transmission signal sequence from output of the matched filter.

**Amended claims under Art. 19.1 PCT**

**1.** A wireless communication system comprising plural wireless communication apparatuses, wherein:

each of the wireless communication apparatuses comprises a transmitter comprising a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted;
each of the wireless communication apparatuses comprises a receiver comprising a demodulating unit configured to demodulate a reception wave modulated with the carrier frequency;
the transmission sequence to be transmitted comprises a pilot signal used for measuring multipath properties and a transmission data signal; and
the wireless communication apparatuses transmit different said carrier frequencies.

**2.** The wireless communication system according to claim 1, wherein:

the transmitter of each of the wireless communication apparatuses comprises a frequency control unit configured to change the carrier frequency and the receiver of each of the wireless communication apparatuses comprises a carrier frequency detector configured to detect a carrier frequency used by another wireless communication apparatus; and
the frequency control unit controls the carrier frequency of the wireless communication apparatuses in which the frequency control unit is provided so as to cause said carrier frequency to be different from a carrier frequency used by another wireless communication apparatus.

**3.** The wireless communication system according to claim 1, wherein:

the transmitter of each of the wireless communication apparatuses comprises a frequency control unit configured to change the carrier frequency and the receiver of each of the wireless communication apparatuses comprises an interference detector configured to detect interference status; and
the frequency control unit controls the carrier frequency of the wireless communication apparatuses in which the frequency control unit is provided so as to cause said carrier frequency to be different from a carrier frequency used by another wireless communication apparatus based on output from the interference detector.

**4.** A wireless communication system comprising plural wireless communication apparatuses, wherein:

each of the wireless communication apparatuses comprises a transmitter comprising a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted;
each of the wireless communication apparatuses comprises a receiver comprising a demodulating unit configured to demodulate a reception wave modulated with the carrier frequency;
the transmission sequence to be transmitted comprises a pilot signal used for measuring multipath properties and a transmission data signal; and
the pseudo periodic sequence generating unit sequentially multiples the transmission sequence to be transmitted by a vector component of a predetermined DFT matrix to generate the periodic sequence.

**5.** (Amended) The wireless communication system according to claim 4, wherein:

the DFT matrix $F_N$ used by the pseudo periodic sequence generating unit is expressed as

$$F_N = \begin{bmatrix} \text{vector } f_0 \\ \text{vector } f_1 \\ \cdot \\ \cdot \\ \cdot \\ \text{vector } f_{N-1} \end{bmatrix} \quad \cdots (28)$$

where the transmission signal sequence is A $(a_0 a_1 \cdots a_M)$, wherein
with the transmission signal sequence $A(a_0 a_1 \cdots a_M)$ and a vector $f_x$ $(0 \leq X \leq N-1)$, a pseudo periodic sequence of the transmission signal sequence A based on a vector $f_x \otimes A$ is generated and transmitted, wherein
assuming that a known signal sequence $B(b_0 b_1, \ldots b_N)$ has the same length as the transmission signal sequence, the received pseudo periodic sequence of the transmission signal sequence A is applied to a matched filter of a vector $f_x \otimes B$, and the transmission signal sequence is obtained from output of the matched filter.

**6.** The wireless communication system according to claim 1 or 4, wherein:

the transmitter of each of the wireless communication apparatuses comprises a periodic sequence control unit configured to control a manner of repeating the periodic sequence generated by the pseudo periodic sequence generating unit and the receiver of each of the wireless communication apparatuses comprises an interference detector configured to detect interference status; and
the periodic sequence control unit controls the manner of repeating the periodic sequence generated by the pseudo periodic sequence generating unit based on output from the interference detector in such a manner to mitigate interference.

**7.** The wireless communication system according to claim 1 or 4, wherein:

the pseudo periodic sequence generating unit uses any one of filters having properties of (1, 1, 1, 1), (1, j, -1, -j), (1, -1, 1, -1), (1, -j, -1, j) to generate the periodic sequence.

**8.** The wireless communication system according to claim 1 or 4, wherein:

the spread sequence or the pilot signal used for measuring the multipath properties comprises a zero correlation zone sequence.

**9.** The wireless communication system according to claim 1 or 4, wherein:

the wireless communication system comprises a mobile communication system.

**10.** The wireless communication system according to claim 1 or 4, wherein:

the wireless communication system comprises a wireless LAN communication system.

**11.** A wireless communication method performed in a wireless communication system comprising plural wireless communication apparatuses, the wireless communication method comprising:

a transmitting step and a receiving step; wherein:

the transmitting step comprises a periodic sequence generating step of generating a periodic sequence in which a transmission sequence to be transmitted is repeated a predetermined number of times and a modulating step of modulating, with a carrier frequency, the transmission sequence to be transmitted;
the receiving step comprises a demodulating step of demodulating a reception wave modulated with the carrier frequency;
the transmission sequence to be transmitted comprises a pilot signal used for measuring multipath properties and a transmission data signal; and
the wireless communication apparatuses transmit different said carrier frequencies at different timings.

**12.** A wireless communication method performed in a wireless communication system comprising plural wireless communication apparatuses, the wireless communication method comprising:

a transmitting step and a receiving step; wherein:

the transmitting step comprises a spreading step of spreading a transmission sequence to be transmitted with a predetermined spread sequence, a periodic sequence generating step of generating a periodic sequence in which the transmission sequence to be transmitted is repeated a predetermined number of times, and a modulating step of modulating, with a carrier frequency, the transmission sequence to be transmitted;
the receiving step comprises a demodulating step of demodulating a reception wave modulated with the carrier frequency and a despreading step of despreading the spread signal sequence;
the transmission sequence to be transmitted comprises a pilot signal used for measuring multipath properties and a transmission data signal; and
the periodic sequence generating step comprises a step of sequentially multiplying the transmission sequence to be transmitted by a vector component of a predetermined DFT matrix to generate the periodic sequence.

**13.** (Amended) The wireless communication method according to claim 12, wherein:

the DFT matrix $F_N$ used by the pseudo periodic sequence generating unit is expressed as

$$F_N = \begin{bmatrix} \text{vector } f_0 \\ \text{vector } f_1 \\ \cdot \\ \cdot \\ \cdot \\ \text{vector } f_{N-1} \end{bmatrix} \quad \cdots (29)$$

where the transmission signal sequence is A $(a_0 a_1 \cdots a_M)$, wherein
with the transmission signal sequence $A(a_0 a_1 \cdots a_M)$ and a vector $f_x$ ($0 \leq X \leq N-1$), a pseudo periodic sequence of the transmission signal sequence A based on a vector $f_x \otimes A$ is generated and transmitted, wherein
assuming that a known signal sequence $B(b_0 b_1 \cdots b_M)$ has the same length as the transmission signal sequence, the received pseudo periodic sequence of the transmission signal sequence A is applied to a matched filter of a vector $f_x \otimes B$, and the transmission signal sequence is obtained from output of the matched filter.

**14.** The wireless communication method according to claim 12, wherein the periodic sequence is generated at the periodic sequence generating step by using any one of filters having properties of (1, 1, 1, 1), (1, j, -1, -j), (1, -1, 1, -1), (1, -j, -1, j).

**15.** The wireless communication method according to claim 12, wherein:

the spread sequence or the pilot signal used for measuring the multipath properties is a zero correlation zone sequence.

**16.** A communication apparatus comprising a transmitter and a receiver, wherein:

the transmitter comprises a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted;
the receiver comprises a demodulating unit configured to demodulate a reception wave modulated with the carrier frequency;
the transmission sequence to be transmitted comprises a pilot signal used for measuring multipath properties and a transmission data signal; and
the wireless communication apparatuses transmit different said carrier frequencies.

**17.** A communication apparatus comprising a transmitter and a receiver, wherein:

the transmitter comprises a pseudo periodic sequence generating unit configured to generate a periodic sequence in which a transmission sequence to be transmitted is repeated a predetermined number of times and a modulating unit configured to modulate, with a carrier frequency, the transmission sequence to be transmitted;
the receiver comprises a demodulating unit configured to demodulate a reception wave modulated with the carrier frequency;
the transmission sequence to be transmitted comprises a pilot signal used for measuring multipath properties and a transmission data signal; and
the pseudo periodic sequence generating unit sequentially multiples the transmission sequence to be transmitted by a vector component of a predetermined DFT matrix to generate the periodic sequence.

**18.** (Amended) The communication apparatus according to claim 17, wherein:

the DFT matrix $F_N$ used by the pseudo periodic sequence generating unit is expressed as

$$F_N = \begin{bmatrix} \text{vector } f_0 \\ \text{vector } f_1 \\ \cdot \\ \cdot \\ \cdot \\ \text{vector } f_{N-1} \end{bmatrix} \quad \cdots (30)$$

where the transmission signal sequence is A $(a_0 a_1 ... a_M)$, wherein
with the transmission signal sequence A $(a_0 a_1 \cdots a_M)$ and a vector $f_x$ $(0 \leq X \leq N-1)$, a pseudo periodic sequence of the transmission signal sequence A based on a vector $f_X \otimes A$ is generated and transmitted, wherein
assuming that a known signal sequence B $(b_0 b_1 \cdots b_M)$ has the same length as the transmission signal sequence, the received pseudo periodic sequence of the transmission signal sequence A is applied to a matched filter of a vector $f_x \otimes B$, and the transmission signal sequence is obtained from output of the matched filter.

# FIG.1

(A)

$\underline{10}$

TRANSMISSION DATA → ENCODING UNIT (11) → PILOT SIGNAL ADDING UNIT (12) → a(t) → PSEUDO PERIODIC SEQUENCE GENERATING UNIT (13) → SPREAD UNIT (14) → MODULAT-ING UNIT (15) → antenna (16)

SPREAD SEQUENCE GENERATING UNIT (17) → $m_1(t)$ → SPREAD UNIT

OSCIL-LATOR (18) → $f_1$ → MODULAT-ING UNIT

(B)

$\underline{20}$

antenna (21) → DEMODU-LATING UNIT (22) → MULTIPATH PROPERTY MEASURING UNIT (24), MULTIPATH REMOVING UNIT / USING UNIT (26) → MATCHED FILTER (DESPREADING UNIT) (27) → DECOD-ING UNIT (28) → DATA

OSCIL-LATOR (23) → $f_1$ → DEMODU-LATING UNIT

SPREAD SEQUENCE GENERATING UNIT (25) → $m_1(t)$

$m_1(t)$ → MATCHED FILTER (DESPREADING UNIT)

EP 1 819 084 A1

# FIG.2

```
                                                    ⌒41
┌──────────────────────────────────────────────────────────┐
│              TRANSMISSION SIGNAL  a  (t)                   │
│        ⌒411                         ⌒412                   │
│ ┌─────────────────────────┬──────────────────────────────┐│
│ │ MULTIPATH PROPERTY-     │ ENCODED TRANSMISSION          ││
│ │ MEASURING SIGNAL        │ DATA SIGNAL                   ││
│ │ (PILOT SIGNAL)          │                               ││
│ └─────────────────────────┴──────────────────────────────┘│
└──────────────────────────────────────────────────────────┘
```

# FIG.3

(A) $a_1(t)$ :  | a(t) | a(t) | a(t) | a(t) |

(B) $a_2(t)$ :  | a(t) | ja(t) | -a(t) | -ja(t) |

(C) $a_3(t)$ :  | a(t) | -a(t) | a(t) | -a(t) |

(D) $a_4(t)$ :  | a(t) | -ja(t) | -a(t) | ja(t) |

EP 1 819 084 A1

# FIG.4

(A)

$f_1$

(B)

$f_2$

# FIG.5

WIRELESS COMMUNICATION APPARATUS — 31

TX — 311

VCO — 3111

FREQUENCY CONTROL UNIT — 3112

CARRIER FREQUENCY DETECTOR — 3121

312

RX

33

# FIG.6

# FIG.7

SPECTRUM OF $a_1(t)$: ———

SPECTRUM OF $a_2(t)$: ------

SPECTRUM OF $a_3(t)$: ————

SPECTRUM OF $a_4(t)$: —·—·—

# FIG.8

# FIG.9

# FIG.10

$$\frac{1}{\sqrt{4}} \begin{pmatrix} W_4^0 & W_4^0 & W_4^0 & W_4^0 \\ W_4^0 & W_4^{-1} & W_4^{-2} & W_4^{-3} \\ W_4^0 & W_4^{-2} & W_4^{-4} & W_4^{-6} \\ W_4^0 & W_4^{-3} & W_4^{-6} & W_4^{-9} \end{pmatrix}$$

→ FIRST LINE

→ SECOND LINE

→ THIRD LINE

→ FOURTH LINE

## FIG.11

$$\frac{1}{\sqrt{4}}\begin{pmatrix} 1 & 1 & 1 & 1 \\ 1 & W_4^{-1} & W_4^{-2} & W_4^{-3} \\ 1 & W_4^{-2} & 1 & W_4^{-2} \\ 1 & W_4^{-3} & W_4^{-2} & W_4^{-1} \end{pmatrix}$$

→ FIRST LINE
→ SECOND LINE
→ THIRD LINE
→ FOURTH LINE

## FIG.12

$$\frac{1}{\sqrt{4}}\begin{pmatrix} 1 & 1 & 1 & 1 \\ 1 & -j & -1 & j \\ 1 & -1 & 1 & -1 \\ 1 & j & -1 & -j \end{pmatrix}$$

→ FIRST LINE
→ SECOND LINE
→ THIRD LINE
→ FOURTH LINE

## FIG.13

$$\frac{1}{\sqrt{N}}\begin{pmatrix} W_N^0 & W_N^0 & W_N^0 & \cdots & W_N^0 \\ W_N^0 & W_N^{-1} & W_N^{-2} & \cdots & W_N^{-(N-1)} \\ W_N^0 & W_N^{-2} & W_N^{-4} & \cdots & W_N^{-2(N-1)} \\ \cdots & \cdots & \cdots & \cdots & \cdots \\ W_N^0 & W_N^{-(N-1)} & W_N^{-2(N-1)} & \cdots & W_N^{-(N-1)(N-1)} \end{pmatrix}$$

→ FIRST LINE
→ SECOND LINE
→ THIRD LINE
→ N<sup>th</sup> LINE

# FIG.14

PSEUDO PERIODIC
SEQUENCE
GENERATING UNIT
51

$a_1(t)$

SPREAD
UNIT
52

53

54

$f_1$

$m_1(t)$

SPREAD
SEQUENCE
GENERATING
UNIT
55

OSCIL-
LATOR
56

# FIG.15

PSEUDO PERIODIC
SEQUENCE
GENERATING UNIT
61

$a_2(t)$

SPREAD
UNIT
62

63

64

$f_1$

$m_1(t)$

SPREAD
SEQUENCE
GENERATING
UNIT
65

OSCIL-
LATOR
66

# FIG.16

| 71 | 72 | | | | 73 |
|---|---|---|---|---|---|
| $-ja(t)$ | $a(t)$ | $ja(t)$ | $-a(t)$ | $-ja(t)$ | $a(t)$ |

# FIG.17

$$\begin{pmatrix} (1 \quad 1 \quad 1 \quad -1) & (1 \quad -1 \quad 1 \quad 1) \\ (1 \quad 1 \quad -1 \quad 1) & (1 \quad -1 \quad -1 \quad -1) \end{pmatrix}$$

# FIG.18

Vector A＝( 1 1 1 −1 0 0 0 0 0 1 −1 1 1)

Vector B＝( 1 1 −1 1 0 0 0 0 0 1 −1 −1 −1)

# FIG.19

EP 1 819 084 A1

## INTERNATIONAL SEARCH REPORT

| | International application No. |
|---|---|
| | PCT/JP2005/021921 |

A. CLASSIFICATION OF SUBJECT MATTER
*H04J13/04*(2006.01), *H04J1/00*(2006.01)

According to International Patent Classification (IPC) or to both national classification and IPC

B. FIELDS SEARCHED

Minimum documentation searched (classification system followed by classification symbols)
*H04J13/04*(2006.01), *H04J1/00*(2006.01)

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
IEEEXplore

C. DOCUMENTS CONSIDERED TO BE RELEVANT

| Category* | Citation of document, with indication, where appropriate, of the relevant passages | Relevant to claim No. |
|---|---|---|
| Y | WO 2004/021598 A1 (Naoki SUEHIRO), 11 March, 2004 (11.03.04), Figs. 1 to 4 & EP 1542372 A1 | 1-18 |
| Y | Naoki SUEHIRO et al., "DFT Gyoretsu tono Kronecker Product o Mochiita Multipath Shingo no Gi-Coherent Kasan ni yoru Musen Shuhasu Riyo Koritsu no Zodai", IEICE Technical Report, SST2002-161, 19 March, 2003 (19.03.03), pages 45 to 49 | 1-18 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 December, 2005 (19.12.05) | 27 December, 2005 (27.12.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

30

**INTERNATIONAL SEARCH REPORT**

International application No.

PCT/JP2005/021921

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-344359 A (Noriyoshi KUROYANAGI), 29 November, 2002 (29.11.02), Figs. 2 to 6 & JP 2002-271232 A & EP 1376917 A1 & CN 1459162 A & US 2004/0131030 A1 & WO 2002/073853 A1 | 1-18 |
| Y | JP 10-98444 A (Noriyoshi KUROYANAGI), 14 April, 1998 (14.04.98), Claims 1, 2 & AU 4318297 A & EP 869632 A1 & CN 1205143 A & JP 3145642 B2 & US 6421367 B1 & WO 1998/012831 A1 | 1-18 |
| Y | SUEHIRO, N., A signal design without co-channel interference for approximately synchronized CDMA systems, Selected Areas in Communications, IEEE Journal on, Vol.12, No.5, 1994.06, pages 837 to 841 | 1-18 |
| Y A | JP 2004-228927 A (Hitachi, Ltd.), 12 August, 2004 (12.08.04), Full text; all drawings & US 2004/0235485 A1 | 2,3,6 1,4,5,7-18 |
| Y A | JP 11-346356 A (Matsushita Electric Industrial Co., Ltd.), 14 December, 1999 (14.12.99), Claim 3 & CN 1262844 A & TW 416247 A & KR 2001013203 A & KR 357642 B & WO 1999/052287 A1 | 2,3,6 1,4,5,7-18 |
| A | Naoki SUEHIRO, "Spectrum Kakusan no Koyo – Shuhasu Riyo Koritsu no Kojo –", 2000 Nen The Institute of Electronics, Information and Communication Engineers Sogo Taikai Koen Ronbunshu Kiso· Kyokai, 07 March, 2000 (07.03.00), pages 496 to 497 | 1-18 |
| A | WO 2004/021597 A1 (Yokohama TLO Co., Ltd.), 11 March, 2004 (11.03.04), Figs. 1 to 11 & EP 1545020 A1 | 1-18 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3145642 B

- JP 2004346820 A